(19) Europäisches Patentamt / European Patent Office / Office européen des brevets

(11) **EP 3 379 224 B1**

(12) **EUROPEAN PATENT SPECIFICATION**

(45) Date of publication and mention of the grant of the patent:
**13.04.2022 Bulletin 2022/15**

(21) Application number: **16875457.0**

(22) Date of filing: **05.12.2016**

(51) International Patent Classification (IPC):
**G01M 11/00** *(2006.01)*  **G01J 1/00** *(2006.01)*
**G01J 3/50** *(2006.01)*  **G02F 1/13** *(2006.01)*
**G01J 1/36** *(2006.01)*  **G01J 1/44** *(2006.01)*
**G01J 1/42** *(2006.01)*

(52) Cooperative Patent Classification (CPC):
**G01J 1/00; G01J 1/36; G01J 1/4228; G01J 1/44;**
**G01J 3/50; G01M 11/00; G02F 1/13;**
G01J 2001/4247

(86) International application number:
**PCT/JP2016/086118**

(87) International publication number:
**WO 2017/104474 (22.06.2017 Gazette 2017/25)**

(54) **OPTICAL CHARACTERISTIC MEASURING DEVICE**

VORRICHTUNG ZUR MESSUNG VON OPTISCHEN EIGENSCHAFTEN

DISPOSITIF DE MESURE DE CARACTÉRISTIQUE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2015 JP 2015245500**

(43) Date of publication of application:
**26.09.2018 Bulletin 2018/39**

(73) Proprietor: **Konica Minolta, Inc.**
**Tokyo 100-7015 (JP)**

(72) Inventors:
• **SEKIGUCHI, Akihito**
**Tokyo 100-7015 (JP)**
• **SHIMIZU, Shinji**
**Tokyo 100-7015 (JP)**
• **TAKAHASHI, Makoto**
**Tokyo 100-7015 (JP)**

(74) Representative: **Hoffmann Eitle**
**Patent- und Rechtsanwälte PartmbB**
**Arabellastraße 30**
**81925 München (DE)**

(56) References cited:
**JP-A- H0 829 864**   **JP-A- H06 130 920**
**JP-A- 2001 128 090**  **JP-A- 2002 122 513**
**JP-A- 2006 319 950**  **JP-A- 2010 048 719**
**US-A1- 2015 163 392**

**Description**

**TECHNICAL FIELD**

The present invention relates to a technique for measuring, for example, optical characteristics of a liquid crystal display.

**BACKGROUND ART**

A plurality of optical characteristics (e.g. flicker, chromaticity, luminance) of a display device such as a liquid crystal display are measured in a development process and a manufacturing process. It is convenient if the plurality of optical characteristics can be measured by one device. Patent literature 1 discloses, as such a device, a display characteristic measuring device with a first light receiver for outputting a signal indicating an X value, a second light receiver for outputting a signal indicating a Y value and a third light receiver for outputting a signal indicating a Z value when receiving light, and a first amplifier for amplifying the signal output from the first light receiver, a second amplifier for amplifying the signal output from the second light receiver and a third amplifier for amplifying the signal output from the third light receiver. Each of the first, second and third light receivers is a combination of a filter and a photodiode. The X, Y and Z values respectively mean tristimulus values.

In the device disclosed in patent literature 1, a wiring (wiring in which the signal indicating the Y value flows) connected to the output of the second amplifier is branched into a first wiring and a second wiring. This device can simultaneously measure flicker, chromaticity and luminance by using the signal flowing in the first wiring as a signal for flicker measurement and the signal flowing in the second wiring as a signal for chromaticity and luminance measurements.

In the device disclosed in patent literature 1, the second amplifier as a rear-stage circuit of the second light receiver is used in flicker measurement and chromaticity and luminance measurements. However, a rear-stage circuit suitable for flicker measurement and a rear-stage circuit suitable for chromaticity and luminance measurements are respectively different.

Specifically, an S/N ratio of the signal output from the second light receiver and indicating the Y value needs to be improved to improve luminance measurement accuracy. A case is considered where an integration circuit using an operational amplifier is employed as a rear-stage circuit to amplify the signal indicating the Y value and improve the S/N ratio thereof. This integration circuit relatively reduces a noise component and improves the S/N ratio by time-integrating the signal indicating the Y value. The longer an integration time in the integration circuit, the higher the S/N ratio.

The Y signal is also used in flicker measurement. To measure flicker, a sampling rate needs to be increased. To increase the sampling rate, the integration time of the integration circuit has to be short. If the integration time becomes shorter, the S/N ratio does not become high. Accordingly, the integration circuit using the operational amplifier is used in both flicker measurement and chromaticity and luminance measurements and the S/N ratio cannot be increased in the case of simultaneously conducting these measurements.

JPH 0829864 discusses a camera receiving the illumination light and comparing the respective light reception outputs. When the amount of received light for an infrared region is large, it is determined as a tungsten electric lamp. Otherwise, the presence or absence of flicker is detected further to detection of natural light or fluorescent light.

US 20150163392 discusses an image sensor includes an imaging area and one or more flicker detection regions. The imaging area includes pixels that capture images. Each flicker detection region includes pixels that are sampled multiple times while an image is being captured. The samples can be analyzed to detect flicker in the scene being imaged.

**CITATION LIST**

**PATENT LITERATURE**

Patent literature 1: Japanese Unexamined Patent Publication No. 2002-122513

**SUMMARY OF INVENTION**

An object of the present invention is to provide an optical characteristic measuring device capable of simultaneously measuring flicker and an optical characteristic different from the flicker and using each of a rear-stage circuit suitable for flicker measurement and a rear-stage circuit suitable for measurement of the optical characteristic different from the flicker.

The mentioned problems are solved by the subject-matter of the independent claims. Further preferred embodiments are defined in the dependent claim.

An optical characteristic measuring device according to an aspect achieving the above object is an optical characteristic measuring device capable of simultaneously measuring flicker and an optical characteristic different from the flicker, and includes a first light receiving sensor configured to measure the flicker, a first rear-stage circuit configured to have a signal output from the first light receiving sensor input thereto, a second light receiving sensor configured to measure the optical characteristic, and a second rear-stage circuit configured to have a signal output from the second light receiving sensor input thereto.

The above and other objects, features and advantages of the present invention will become apparent from the following detailed description and the accompanying drawings.

**BRIEF DESCRIPTION OF DRAWINGS**

FIG. 1 is a block diagram showing the entire configuration of an optical characteristic measuring device not part of the invention,

FIG. 2 is a circuit diagram showing a circuit composed of light receiving sensors and amplifiers provided in the optical characteristic measuring device shown in FIG. 1,

FIG. 3 is a circuit diagram of a circuit composed of light receiving sensors and amplifiers provided in an optical characteristic measuring device according to a comparative example,

FIG. 4 is a circuit diagram showing a connected state of a circuit composed of light receiving sensors and amplifiers provided in an optical characteristic measuring device according to the invention in a first mode of the optical characteristic measuring device,

FIG. 5 is a circuit diagram showing a connected state of the circuit composed of the light receiving sensors and the amplifiers provided in the optical characteristic measuring device according to the invention in a second mode of the optical characteristic measuring device,

FIG. 6 is a circuit diagram showing a connected state of the circuit composed of the light receiving sensors and the amplifiers provided in the optical characteristic measuring device according to the invention in a third mode of the optical characteristic measuring device,

FIG. 7 is a block diagram showing a relationship of an arithmetic control unit, an operation unit and a display unit provided in the optical characteristic measuring device according to the invention,

FIG. 8 is a flow chart showing the operation of the optical characteristic measuring device according to the invention,

FIG. 9 is a circuit diagram showing a connected state of a circuit composed of light receiving sensors and amplifiers provided in an optical characteristic measuring device according to a further embodiment in a first mode of the optical characteristic measuring device,

FIG. 10 is a graph showing a relationship between a signal output from an amplifier and signals output from a filter, and

FIG. 11 is a block diagram showing a relationship of an arithmetic control unit, an operation unit and a display unit provided in the optical characteristic measuring device.

**DESCRIPTION OF EMBODIMENTS**

Hereinafter, embodiments of the present invention are described in detail on the basis of the drawings. In each figure, components denoted by the same reference signs are the same components and the description of already-described contents thereof is omitted.

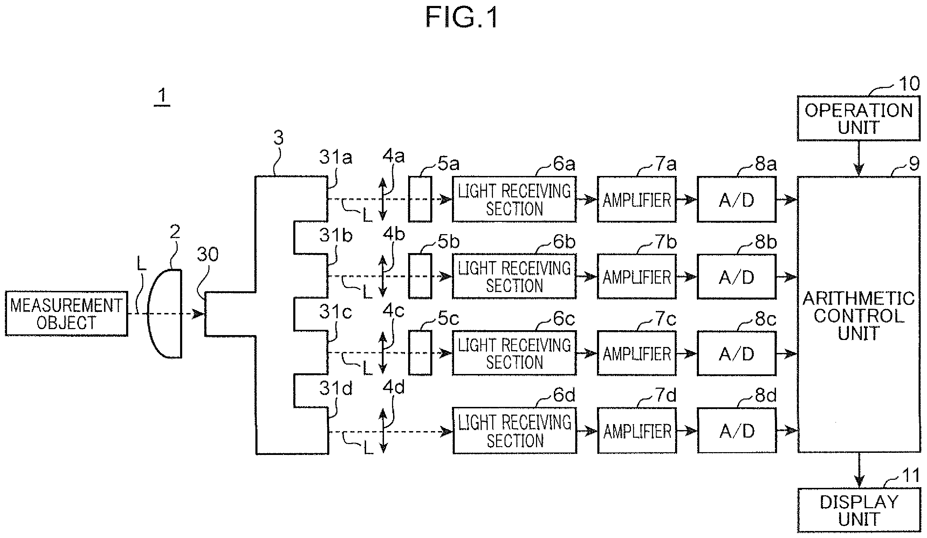

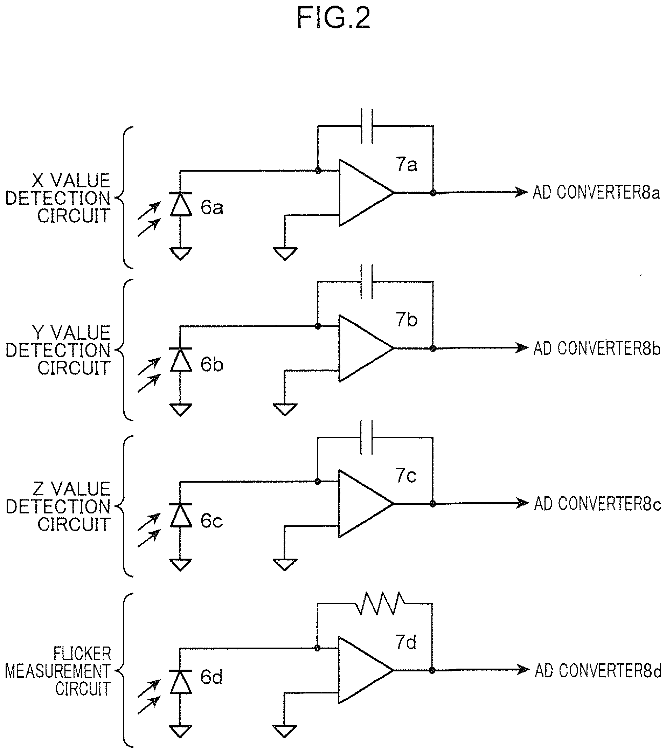

FIG. 1 is a block diagram showing the entire configuration of an optical characteristic measuring device 1 not part of the present invention. FIG. 2 is a circuit diagram showing a circuit composed of light receiving sensors 6a, 6b, 6c and 6d and amplifiers 7a, 7b, 7c and 7d provided in the optical characteristic measuring device 1. With reference to FIGS. 1 and 2, the optical characteristic measuring device 1 includes an objective lens 2, a light splitting unit 3, lenses 4a, 4b, 4c and 4d, filters 5a, 5b and 5c, the light receiving sensors 6a, 6b, 6c and 6d, the amplifiers 7a, 7b, 7c and 7d, AD converters 8a, 8b, 8c and 8d, an arithmetic control unit 9, an operation unit 10 and a display unit 11.

The objective lens 2 has positive optical power and introduces light L from a measurement object to the light splitting unit 3. The optical power is an inverse of a focal length. The measurement object is, for example, a screen image displayed on a liquid crystal display.

The light splitting unit 3 includes a bundle of optical fibers and is structured such that this bundle is divided into four parts at an intermediate position. The light L transmitted through the objective lens 2 is incident on the light splitting unit 3 from an incident end 30 of the light splitting unit 3, split into four in the light splitting unit 3 and emitted from four exit ends 31a, 31b, 31c and 31d.

The lens 4a has positive optical power and introduces the light emitted from the exit end 31a to the filter 5a. The filter 5a is a filter for detecting an X value out of tristimulus values. The light receiving sensor 6a is an example of a second light receiving sensor, receives the light passed through the filter 5a and outputs a photocurrent corresponding to a received light intensity. This photocurrent becomes a signal indicating the X value.

The lens 4b has positive optical power and introduces the light emitted from the exit end 31b to the filter 5b. The filter 5b is a filter for detecting a Y value out of the tristimulus values. The light receiving sensor 6b is an example of the second light receiving sensor, receives the light passed through the filter 5b and outputs a photocurrent corresponding to a received light intensity. This photocurrent becomes a signal indicating the Y value.

The lens 4c has positive optical power and introduces the light emitted from the exit end 31c to the filter 5c. The filter 5c is a filter for detecting a Z value out of the tristimulus values. The light receiving sensor 6c is an example of the second light receiving sensor, receives the light passed through the filter 5c and outputs a photocurrent corresponding to a received light intensity. This photocurrent becomes a signal indicating the Z value.

The lens 4d has positive optical power and introduces the light emitted from the exit end 31d to the light receiving sensor 6d. The light receiving sensor 6d is an example of a first light receiving sensor, receives the light passed through the lens 4d and outputs a photocurrent corresponding to a received light intensity. This photocurrent becomes a signal used in flicker measurement.

Although photodiodes are used as the light receiving sensors 6a, 6b, 6c and 6d, phototransistors may be used.

The amplifier 7a is an example of a second rear-stage circuit and amplifies the signal output from the light receiving sensor 6a and indicating the X value. A circuit for X value detection is constituted by the light receiving sensor 6a and the amplifier 7a. The amplifier 7b is an example of the second rear-stage circuit and amplifies the signal output from the light receiving sensor 6b and indicating the Y value. A circuit for Y value detection is constituted by the light receiving sensor 6b and the amplifier 7b. The amplifier 7c is an example of the second rear-stage circuit and amplifies the signal output from the light receiving sensor 6c and indicating the Z value. A circuit for Z value detection is constituted by the light receiving sensor 6c and the amplifier 7c.

The amplifiers 7a, 7b and 7c are each an integration circuit using an operational amplifier. This causes the signal output from the amplifier 7a and indicating the X value, the signal output from the amplifier 7b and indicating the Y value and the signal output from the amplifier 7c and indicating the Z value to respectively become signals having a large S/N ratio.

The amplifier 7d is an example of a first rear-stage circuit and amplifies the signal output from the light receiving sensor 6d and used in flicker measurement. A circuit for flicker measurement is constituted by the light receiving sensor 6d and the amplifier 7d. The amplifier 7d is not an integration circuit using an operational amplifier unlike the amplifiers 7a, 7b and 7c, but a current-voltage conversion circuit (transimpedance circuit) using an operational amplifier. In this way, a sampling rate can be increased in flicker measurement.

The AD converter 8a converts the signal output from the amplifier 7a from an analog signal into a digital signal and sends the resulting signal to the arithmetic control unit 9. The AD converter 8b converts the signal output from the amplifier 7b from an analog signal into a digital signal and sends the resulting signal to the arithmetic control unit 9. The AD converter 8c converts the signal output from the amplifier 7c from an analog signal into a digital signal and sends the resulting signal to the arithmetic control unit 9. The AD converter 8d converts the signal output from the amplifier 7d from an analog signal into a digital signal and sends the resulting signal to the arithmetic control unit 9.

The arithmetic control unit 9 is a microcomputer realized by a CPU (Central Processing Unit), a RAM (Random Access Memory), a ROM (Read Only Memory) and the like, and controls various calculations and controls necessary to measure optical characteristics. These calculations include calculations necessary to measure flicker and optical characteristics (e.g. chromaticity, luminance) different from the flicker.

The operation unit 10 is a device realized by a keyboard, a touch panel or the like and configured to input commands and the like necessary to operate the optical characteristic measuring device 1 to the optical characteristic measuring device 1. The display unit 11 is realized by a liquid crystal display or the like and a measurement result on the flicker, measurement results on the optical characteristics different from the flicker and the like are displayed thereon.

With reference to FIG. 1, the operation of the optical characteristic measuring device 1 is briefly described. Although the measurements of the chromaticity and the luminance are described as examples of the measurements of the optical characteristics different from the flicker, only the chromaticity may be measured or only the luminance may be measured. A measurer operates the operation unit 10 to input a command of simultaneously measuring the flicker, the chromaticity and the luminance. This command is sent to the arithmetic control unit 9, and the arithmetic control unit 9 activates the light receiving sensors 6a, 6b, 6c and 6d, the amplifiers 7a, 7b, 7c and 7d and the AD converters 8a, 8b, 8c and 8d. In this way, the light receiving sensor 6a receives light from the measurement object via the objective lens 2, the light splitting unit 3, the lens 4a and the filter 5a, the light receiving sensor 6b receives the light from the measurement object via the objective lens 2, the light splitting unit 3, the lens 4b and the filter 5b, the light receiving sensor 6c receives the light from the measurement object via the objective lens 2, the light splitting unit 3, the lens 4c and the filter 5c, and the light receiving sensor 6d receives the light from the measurement object via the objective lens 2, the light splitting unit 3 and the lens 4d.

The signal output from the light receiving sensor 6a (signal indicating the X value) by the light receiving sensor 6a receiving the light from the measurement object is amplified by the amplifier 7a, converted from an analog signal into a digital signal by the AD converter 8a and sent to the arithmetic control unit 9. The signal output from the light receiving sensor 6b (signal indicating the Y value) by the light receiving sensor 6b receiving the light from the measurement object is amplified by the amplifier 7b, converted from an analog signal into a digital signal by the AD converter 8b and sent to the arithmetic control unit 9. The signal output from the light receiving sensor 6c (signal indicating the Z value) by the light receiving sensor 6c receiving the light from the measurement object is amplified by the amplifier 7c, converted from an analog signal into a digital signal by the AD converter 8c and sent to the arithmetic control unit 9. The signal output from the light receiving sensor 6d (signal used in flicker measurement) by the light receiving sensor 6d receiving the light from the measurement object is amplified by the amplifier 7d, converted from an analog signal into a digital signal by the AD converter 8d and sent to the arithmetic control unit 9.

The arithmetic control unit 9 performs a predetermined calculation using the signal sent from the AD converter 8a (signal indicating the X value), the signal sent from the AD converter 8b (signal indicating the Y value) and the signal sent from the AD converter 8c (signal indicating the Z value), thereby calculating the chromaticity of the measurement object. A known calculation for obtaining chromaticity can be used as the predetermined calculation. Further, the arithmetic control unit 9 performs a predetermined calculation using the signal sent from the AD converter 8b (signal indicating the Y value), thereby calculating the luminance of the measurement object. A known calculation for obtaining luminance can be used as the predetermined calculation.

The waveform of the signal output from the amplifier 7d is a sine curve waveform (the same applies also to the signals output from the amplifiers 7a, 7b and 7c). If Vmax and Vmin denote a maximum value and a minimum value of this signal, Vmax and Vmin are alternately repeated.

A flicker value is, for example, defined by the following equation.

$$\text{Flicker value} = \text{alternating-current component/direct-current component}$$

$$= [(\text{Vmax-Vmin})/\{(\text{Vmax+Vmin})/2\}]\times 100$$

The arithmetic control unit 9 extracts Vmax and Vmin on the basis of the signal output from the AD converter 8d. Since the signal output from the AD converter 8d includes many digital values, a sampling rate needs to be increased to extract Vmax and Vmin from these digital values. Thus, the current-voltage conversion circuit using the operational amplifier is used as the amplifier 7d. The arithmetic control unit 9 calculates the flicker value using the extracted Vmax and Vmin.

The arithmetic control unit 9 causes the display unit 11 to display the measurement result on the flicker (flicker value) and measurement results on the chromaticity and the luminance (chromaticity value, luminance value). As described above, the optical characteristic measuring device 1 according to this example can simultaneously measure the flicker, the chromaticity and the luminance (in other words, measure them in parallel).

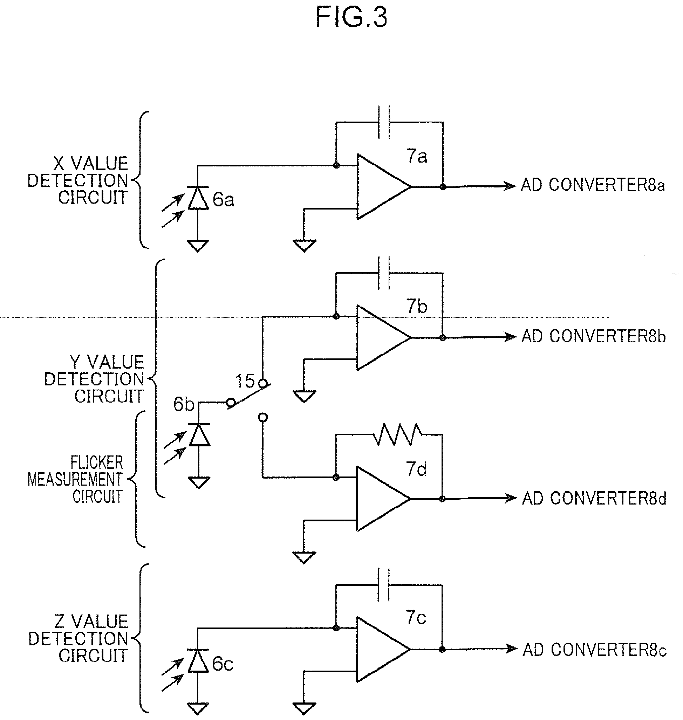

Main effects of this example are described in comparison to a comparative example. FIG. 3 is a circuit diagram of a circuit composed of light receiving sensors and amplifiers provided in an optical characteristic measuring device according to the comparative example and corresponds to FIG. 2. Points of difference of FIG. 3 from FIG. 2 are described. The circuit shown in FIG. 3 includes a switch 15. The switch 15 can switch between a state where an output of a light receiving sensor 6b and an input of an amplifier 7b are connected and a state where the output of the light receiving sensor 6b and an input of an amplifier 7d are connected. A flicker measurement circuit and a Y value detection circuit share the light receiving sensor 6b.

The optical characteristic measuring device according to the comparative example controls the switch 15 such that the output of the light receiving sensor 6b and the input of the amplifier 7d are connected in the case of measuring flicker without measuring chromaticity and luminance. The optical characteristic measuring device according to the comparative example controls the switch 15 such that the output of the light receiving sensor 6b and the input of the amplifier 7b are connected in the case of measuring the chromaticity and the luminance without measuring the flicker.

The optical characteristic measuring device according to the comparative example controls the switch 15 such that the output of the light receiving sensor 6b and the input of the amplifier 7b are connected in the case of simultaneously measuring the flicker, the chromaticity and the luminance. In this case, since the optical characteristic measuring device according to the comparative example needs to increase the sampling rate to measure the flicker, an integration time of the amplifier 7b has to be shortened. Thus, an S/N ratio of a signal output from the amplifier 7b cannot be increased.

In contrast, as shown in FIG. 2, the optical characteristic measuring device 1 according to the first example not part of the invention includes the light receiving sensor 6d and the amplifier 7d as a light receiving sensor and a rear-stage circuit for flicker measurement, and includes the light receiving sensors 6a, 6b and 6c and the amplifiers 7a, 7b and 7c as light receiving sensors and rear-stage circuits for chromaticity and luminance measurements. As just described, since the light receiving sensor and the rear-stage circuit for flicker measurement are different from the light receiving sensors and the rear-stage circuits for chromaticity and luminance measurements according to the optical characteristic measuring device 1 according to the first example, the flicker, the chromaticity and the luminance can be simultaneously measured and the rear-stage circuit suitable for flicker measurement and the rear-stage circuits suitable for chromaticity and luminance measurements can be respectively used.

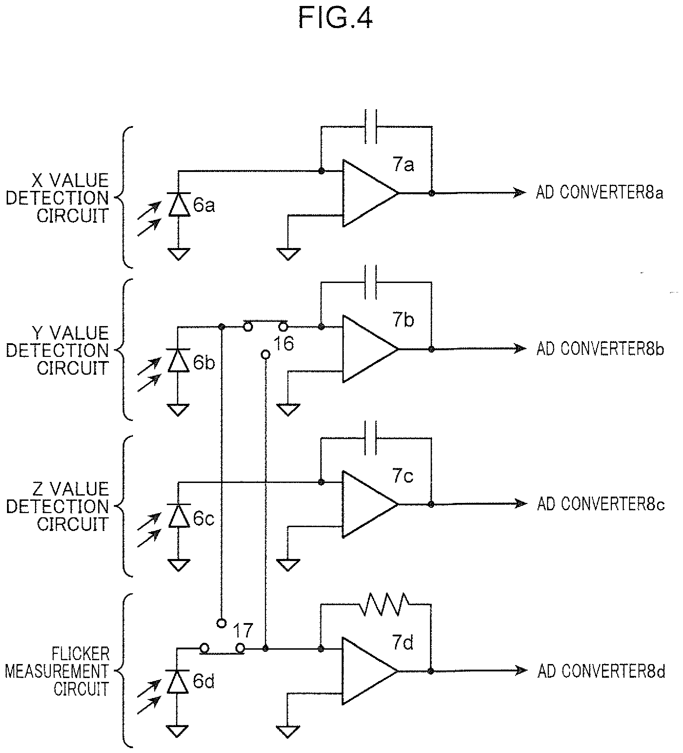

An embodiment of the claimed invention is described. FIG. 4 is a circuit diagram showing a connected state of a circuit composed of light receiving sensors and amplifiers provided in an optical characteristic measuring device according to the invention in a first mode of the optical characteristic measuring device. The optical characteristic measuring device according to the invention can add a signal output from a light receiving sensor 6b and a signal output from a light receiving sensor 6d. The optical characteristic measuring device according to the invention is configured by replacing the circuit shown in FIG. 2 by the circuit shown in FIG. 4 in the block diagram shown in FIG. 1.

The optical characteristic measuring device according to the invention includes switches 16, 17 in addition to the configuration of the circuit shown in FIG. 2. By switching the switch 16, an output of the light receiving sensor 6b is connected to an input of an amplifier 7b or an input of an amplifier 7d. By switching the switch 17, the output of the light receiving sensor 6d is connected to the input of the amplifier 7d or the input of the amplifier 7b.

The first mode is a mode for simultaneously measuring the flicker and the optical characteristics different from the flicker. Although the measurements of the chromaticity and the luminance are described as examples of the measurements of the optical characteristics different from the flicker, only the chromaticity may be measured or only the luminance may be measured. In the first mode, a state of connection shown in FIG. 4 (first connection) is set by the switches 16, 17. In FIG. 4, the switch 16 connects an output of the light receiving sensor 6b (second light receiving sensor) and an input of the amplifier 7b (second rear-stage circuit) and the switch 17 connects an output of the light receiving sensor 6d (first light receiving sensor) and an input of the amplifier 7d (first rear-stage circuit).

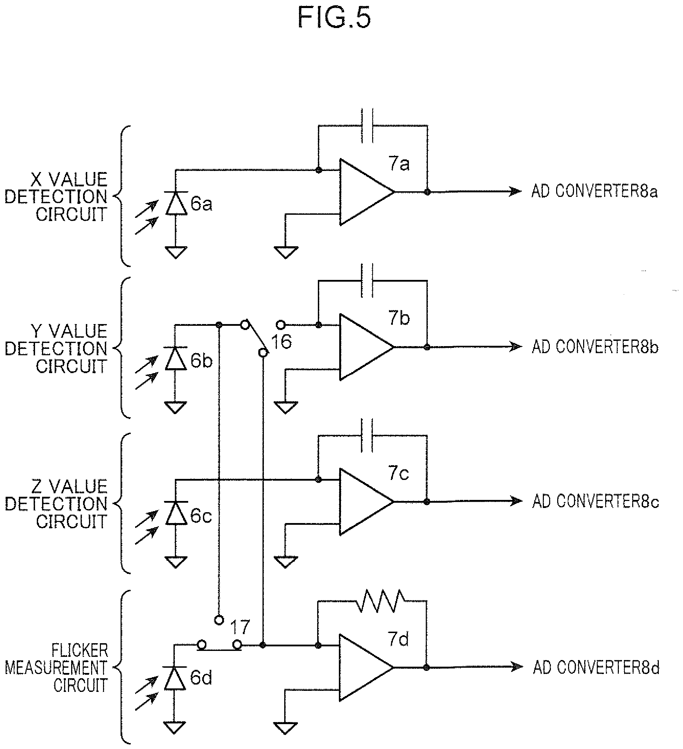

Operation modes of the optical characteristic measuring device of the invention include a second mode and a third mode in addition to the first mode. The second mode is a mode for measuring the flicker without measuring any optical characteristic different from the flicker. In the second mode, a state of connection shown in FIG. 5 (second connection) is set by the switches 16, 17. FIG. 5 is a circuit diagram showing a connected state of the circuit composed of the light receiving sensors 6a, 6b, 6c and 6d and the amplifiers 7a, 7b, 7c and 7d provided in the optical characteristic measuring device according to the invention in the second mode of the optical characteristic measuring device. In FIG. 5, the switch 16 connects an output of the light receiving sensor 6b (second light receiving sensor) and an input of the amplifier 7d (first rear-stage circuit) and the switch 17 connects an output of the light receiving sensor 6d (first light receiving sensor) and the input of the amplifier 7d (first rear-stage circuit).

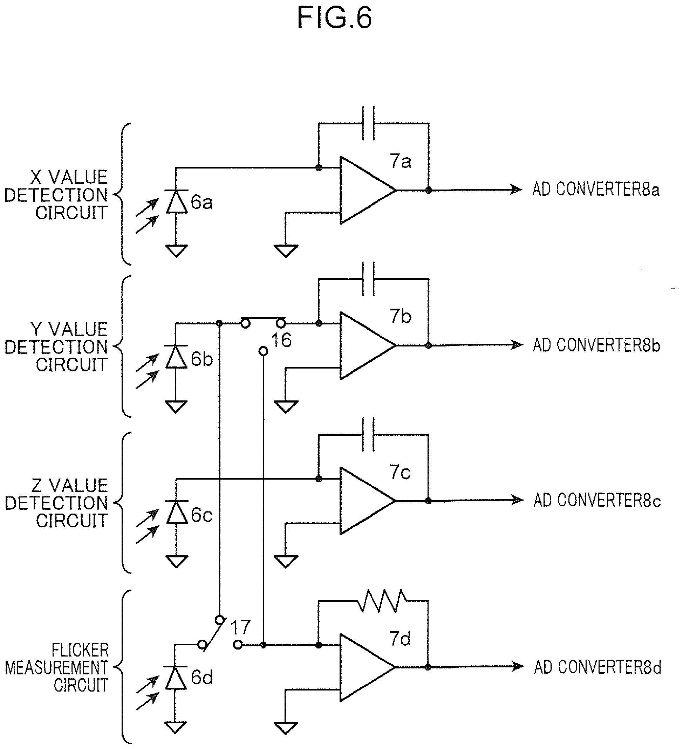

The third mode is a mode for measuring the optical characteristics different from the flicker without measuring the flicker. In the third mode, a state of connection shown in FIG. 6 (third connection) is set by the switches 16, 17. FIG. 6 is a circuit diagram showing a connected state of the circuit composed of the light receiving sensors 6a, 6b, 6c and 6d and the amplifiers 7a, 7b, 7c and 7d provided in the optical characteristic measuring device according to the invention in the third mode of the optical characteristic measuring device. In FIG. 6, the switch 16 connects an output of the light receiving sensor 6b (second light receiving sensor) and an input of the amplifier 7b (second rear-stage circuit) and the switch 17 connects an output of the light receiving sensor 6d (first light receiving sensor) and the input of the amplifier 7b (second rear-stage circuit).

As described above, the switches 16, 17 have a function of a switch unit. The switch unit selectively switches the connection shown in FIG. 4 (first connection), the connection shown in FIG. 5 (second connection) or the connection shown in FIG. 6 (third connection).

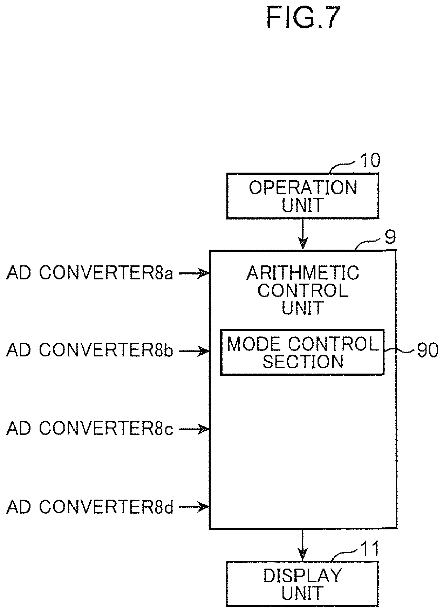

FIG. 7 is a block diagram showing a relationship of an arithmetic control unit 9, an operation unit 10 and a display unit 11 provided in the optical characteristic measuring device according to the invention The arithmetic control unit 9 includes a mode control section 90 as a functional block. The mode control section 90 controls the switches 16, 17 (switch unit) to set the state of connection shown in FIG. 4 (state of first connection) in the first mode for simultaneously measuring the flicker and the optical characteristics different from the flicker, controls the switches 16, 17 (switch unit) to set the state of connection shown in FIG. 5 (state of second connection) in the second mode for measuring the flicker without measuring any optical characteristic different from the flicker, and controls the switches 16, 17 (switch unit) to set the state of connection shown in FIG. 6 (state of third connection) in the third mode for measuring the optical characteristics different from the flicker without measuring the flicker.

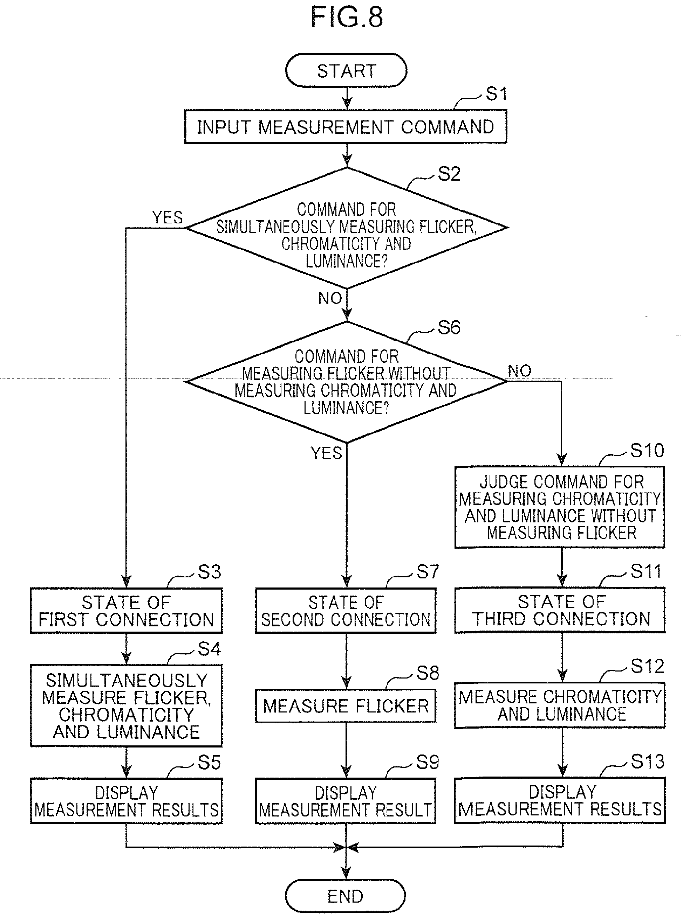

The operation of the optical characteristic measuring device according to the invention is described. FIG. 8 is a flow chart showing this operation. With reference to FIGS. 7 and 8, a measurer operates the operation unit 10 to input a measurement command (Step S1). There are three types of commands, i.e. a command for simultaneously measuring the flicker, the chromaticity and the luminance (command for executing the first mode), a command for measuring the flicker without measuring the chromaticity and the luminance (command to execute the second mode) and a command for measuring the chromaticity and the luminance without measuring the flicker (command to execute the third mode). Here, it is assumed that the command for simultaneously measuring the flicker, the chromaticity and the luminance is input.

The arithmetic control unit 9 judges whether or not the command input in Step S1 is a command for simultaneously measuring the flicker, the chromaticity and the luminance (Step S2). Since the command input in Step S1 is the command for simultaneously measuring the flicker, the chromaticity and the luminance, the arithmetic control unit 9 judges that the command for simultaneously measuring the flicker, the chromaticity and the luminance has been input (YES in Step S2). The mode control section 90 controls the switches 16, 17 to set the state of connection shown in FIG. 4 (first connection) (Step S3).

The arithmetic control unit 9 simultaneously measures the flicker, the chromaticity and the luminance (Step S4). Then, the arithmetic control unit 9 causes the display unit 11 to display a measurement result on the flicker and measurement results on the chromaticity and the luminance (Step S5). Steps S4 and S5 are similar to the operation of the optical characteristic measuring device 1 described in the first embodiment.

A case is described where the command input in Step S1 is a command for measuring the flicker without measuring the chromaticity and the luminance. The arithmetic control unit 9 judges whether or not the command input in Step S1 is a command for simultaneously measuring the flicker, the chromaticity and the luminance (Step S2). Since the command input in Step S1 is the command for measuring the flicker without measuring the chromaticity and the luminance, the arithmetic control unit 9 judges that the command for simultaneously measuring the flicker, the chromaticity and the luminance has not been input (NO in Step S2). The arithmetic control unit 9 judges whether or not the command input in Step S1 is a command for measuring the flicker without measuring the chromaticity and the luminance (Step S6). Since the command input in Step S1 is the command for measuring the flicker without measuring the chromaticity and the luminance, the arithmetic control unit 9 judges that the command for measuring the flicker without measuring the chromaticity and the luminance has been input (YES in Step S6).

The mode control section 90 controls the switches 16, 17 to set the state of connection shown in FIG. 5 (second connection) (Step S7). In this way, a signal obtained by adding a signal output from the light receiving sensor 6d and a signal output from the light receiving sensor 6b (addition signal) is input to the amplifier 7d. The addition signal is amplified by the amplifier 7d, converted from an analog signal to a digital signal by an AD converter 8d and sent to the arithmetic control unit 9.

The arithmetic control unit 9 measures the flicker on the basis of a signal output from the AD converter 8d (Step S8). The measurement of the flicker is the calculation of a flicker value. This is described in the first embodiment. The arithmetic control unit 9 causes the display unit 11 to display a measurement result on the flicker (Step S9).

A case is described where the command input in Step S1 is a command for measuring the chromaticity and the luminance without measuring the flicker. The arithmetic control unit 9 judges whether or not the command input in Step S1 is a command for simultaneously measuring the flicker, the chromaticity and the luminance (Step S2). Since the command input in Step S1 is the command for measuring the chromaticity and the luminance without measuring the flicker, the arithmetic control unit 9 judges that the command for simultaneously measuring the flicker, the chromaticity and the luminance has not been input (NO in Step S2). The arithmetic control unit 9 judges whether or not the command input in Step S1 is a command for measuring the flicker without measuring the chromaticity and the luminance (Step S6). Since the command input in Step S1 is the command for measuring the chromaticity and the luminance without measuring the flicker, the arithmetic control unit 9 judges that the command for measuring the flicker without measuring the chromaticity and the luminance has not been input (NO in Step S6) and judges that the command input in Step S1 is the command for measuring the chromaticity and the luminance without measuring the flicker (Step S10).

The mode control section 90 controls the switches 16, 17 to set the state of connection shown in FIG. 6 (third connection) (Step S11). In this way, a signal obtained by adding a signal output from the light receiving sensor 6b and a signal output from the light receiving sensor 6d (addition signal) is input to the amplifier 7b. The addition signal is amplified by the amplifier 7b, converted from an analog signal to a digital signal by an AD converter 8b and sent to the arithmetic control unit 9. A signal output from the light receiving sensor 6a is input to the amplifier 7a. This signal is amplified by the amplifier 7a, converted from an analog signal to a digital signal by an AD converter 8a and sent to the arithmetic control unit 9. A signal output from the light receiving sensor 6c is input to the amplifier 7c. This signal is amplified by the amplifier 7c, converted from an analog signal to a digital signal by an AD converter 8c and sent to the arithmetic control unit 9.

The arithmetic control unit 9 measures the chromaticity on the basis of signals output from the AD converters 8a, 8b and 8c (Step S12). This is the same as the measurement of the chromaticity described in the first example. Further, the arithmetic control unit 9 measures the luminance on the basis of the signal output from the AD converter 8b (Step S12). This is the same as the measurement of the luminance described in the first example.

The arithmetic control unit 9 causes the display unit 11 to display measurement results on the chromaticity and luminance (Step S13).

Main effects of the invention are described. If a signal input to the amplifier 7d (first rear-stage circuit) is too small, flicker measurement accuracy is reduced. In the second mode, neither the chromaticity nor the luminance is measured. Accordingly, in the invention the signal output from the light receiving sensor 6b is added to the signal output from the light receiving sensor 6d and the resulting addition signal is input to the amplifier 7d in the second mode with reference to FIG. 5. In this way, it can be prevented that the signal input to the amplifier 7d is too small in the second mode.

If a signal input to the amplifier 7b (second rear-stage circuit) is too small, luminance measurement accuracy is reduced. In the third mode, the flicker is not measured. Accordingly, in the invention the signal output from the light receiving sensor 6d is added to the signal output from the light receiving sensor 6b and the resulting addition signal is input to the amplifier 7b in the third mode with reference to FIG. 6. In this way, it can be prevented that the signal input to the amplifier 7b is too small in the third mode.

The invention presents a first modification and a second modification. With reference to FIG. 4, the first modification includes the switch 16, but not the switch 17. An output of the light receiving sensor 6d is connected to an input of the amplifier 7d. The switch 16 selectively switches connection between the output of the light receiving sensor 6b and the input of the amplifier 7b or connection between the output of the light receiving sensor 6b and an input of the amplifier 7d.

A mode control section 90 of the first modification controls the switch 16 to connect the output of the light receiving sensor 6b and the input of the amplifier 7b in the first mode for simultaneously measuring the flicker and the optical characteristics different from the flicker, and controls the switch 16 to connect the output of the light receiving sensor 6b and the input of the amplifier 7d in the second mode for measuring the flicker without measuring the optical characteristics different from the flicker.

In the first modification, the output of the light receiving sensor 6b and the input of the amplifier 7d are connected in the second mode. In this way, a signal output from the light receiving sensor 6b is added to a signal output from the light receiving sensor 6d and the resulting addition signal is input to the amplifier 7d. Thus, according to the first modification, it can be prevented that the signal input to the amplifier 7d is too small in the second mode.

With reference to FIG. 4, the second modification includes the switch 17, but not the switch 16. An output of the light receiving sensor 6b is connected to an input of the amplifier 7b. The switch 17 selectively switches connection between an output of the light receiving sensor 6d and an input of the amplifier 7d or connection between the output of the light receiving sensor 6d and the input of the amplifier 7b.

A mode control section 90 of the second modification controls the switch 17 to connect the output of the light receiving sensor 6d and the input of the amplifier 7d in the first mode for simultaneously measuring the flicker and the optical characteristics different from the flicker, and controls the switch 17 to connect the output of the light receiving sensor 6d and the input of the amplifier 7b in the third mode for measuring the optical characteristics different from the flicker without measuring the flicker.

In the second modification, the output of the light receiving sensor 6d and the input of the amplifier 7b are connected in the third mode. In this way, a signal output from the light receiving sensor 6d is added to a signal output from the light receiving sensor 6b and the resulting addition signal is input to the amplifier 7b. Thus, according to the second modification, it can be prevented that the signal input to the amplifier 7b is too small in the third mode.

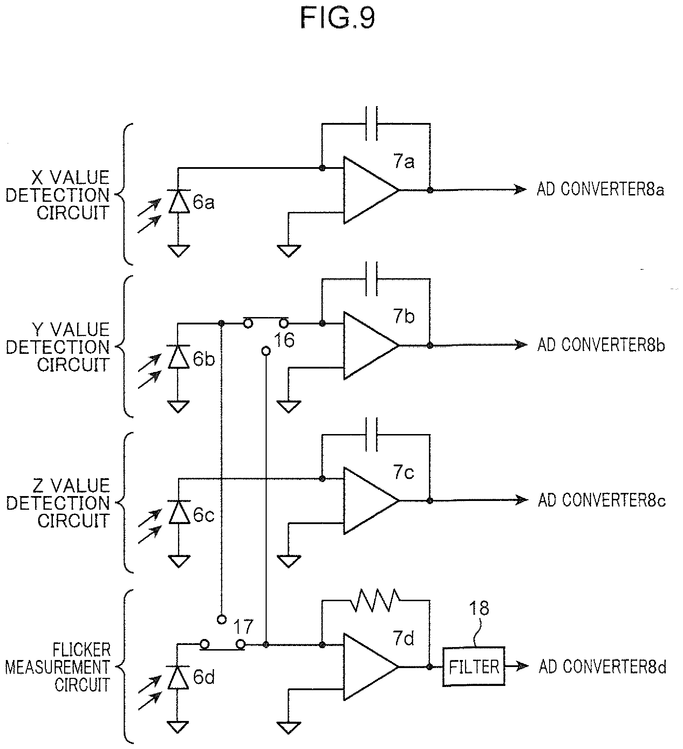

A further embodiment of the invention is described. FIG. 9 is a circuit diagram showing a connected state of a circuit composed of light receiving sensors 6a, 6b, 6c and 6d and amplifiers 7a, 7b, 7c and 7d provided in an optical characteristic measuring device according to the further embodiment in a first mode of the optical characteristic measuring device. If a signal output from the amplifier 7d is saturated, an error of a flicker measurement value becomes large. The optical characteristic measuring device according to the third embodiment determines whether or not the signal output from the amplifier 7d is saturated.

Points of difference of the optical characteristic measuring device according to the further embodiment from the optical characteristic measuring device according to the previous embodiment are described. The optical characteristic measuring device according to the further embodiment includes a filter 18 in addition to the configuration of the circuit shown in FIG. 4. The filter 18 is a low-pass filter, which has a signal output from an amplifier 7d (first rear-stage circuit) input thereto and outputs a signal of a frequency component targeted in flicker measurement out of the input signal. The signal output from the filter 18 is input to an AD converter 8d.

The signal output from the amplifier 7d includes high-frequency components in addition to the frequency component targeted in flicker measurement. Thus, the signal of the frequency component targeted in flicker measurement is extracted from the signal output from the amplifier 7d and is output by the filter 18.

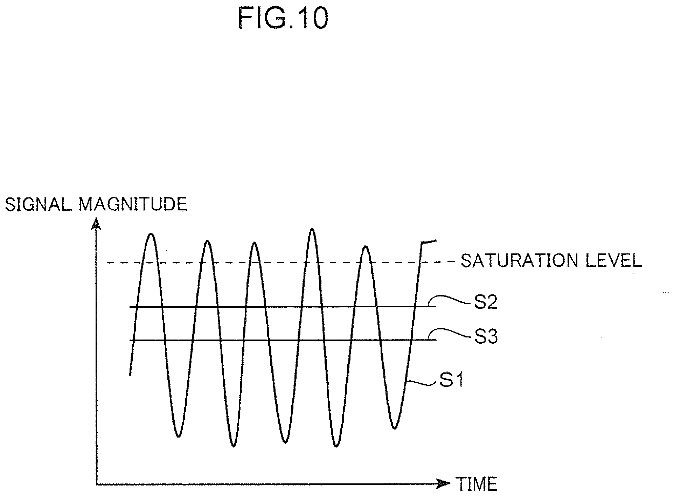

FIG. 10 is a graph showing a relationship of a signal S1 output from the amplifier 7d and signals S2, S3 output from the filter 18. A horizontal axis of the graph represents time and a vertical axis of the graph represents signal magnitude. The signal S1 indicates a signal output from the amplifier 7d when it is assumed that the signal amplified by the amplifier 7d is not saturated in the case that this signal is saturated. Since the signal amplified by the amplifier 7d is saturated, an upper limit value of an actual signal S1 is a saturation level. The signal S2 indicates a signal output from the filter 18 when the signal S1 is input to the filter 18. The signal S3 indicates a signal output from the filter 18 when the actual signal S1 is input to the filter 18.

The signal input to the amplifier 7d is amplified by the amplifier 7d and output. When a maximum value of the amplitude of the amplified signal is a value beyond a dynamic range of the amplifier 7d, the signal output from the amplifier 7d is saturated. When the signal output from the amplifier 7d is saturated, a maximum value of that signal is a saturation level and lower than an original maximum value. This causes the signal S3 output from the filter 18 to be lower than the signal S2 supposed to be originally output. For example, if the maximum value becomes 100 due to the saturation of the signal although the maximum value of the signal output from the amplifier 7d should be 200, an error of the flicker measurement value becomes large and the flicker measurement value cannot be used.

Since the signals S2, S3 output from the filter 18 are smoothed, whether or not the signal output from the amplifier 7d is saturated cannot be determined from the waveforms of the signals S2, S3 output from the filter 18.

The present inventors focused on a relationship of a value of a signal output from the filter 18 and values of signals output from the amplifiers 7a, 7b when the flicker and the optical characteristics different from the flicker were simultaneously measured. If the signal output from the amplifier 7d is not saturated, a predetermined relationship (e.g. proportional relationship) is established between the value of the signal output from the filter 18 and those of the signals output from the amplifiers 7a, 7b and 7c. In contrast, if the signal output from the amplifier 7d is saturated, the predetermined relationship is not established between the value of the signal output from the filter 18 and those of the signals output from the amplifiers 7a, 7b and 7c.

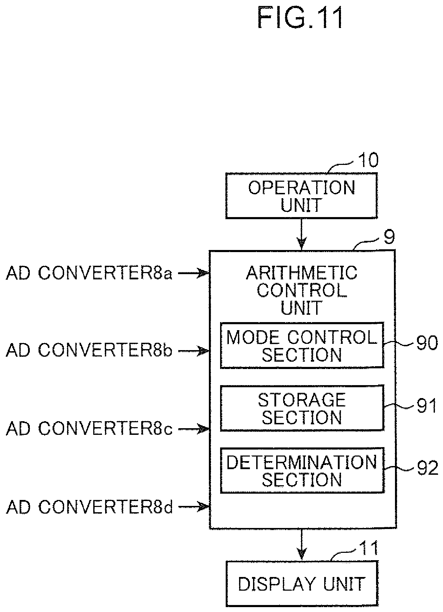

The optical characteristic measuring device according to the further embodiment is based on the following. FIG. 11 is a block diagram showing a relationship of an arithmetic control unit 9, an operation unit 10 and a display unit 11 provided in the optical characteristic measuring device according to the third embodiment. The arithmetic control unit 9 includes a mode control section 90, a storage section 91 and a determination section 92 as functional blocks. The mode control section 90 has been described in the previous embodiment.

With reference to FIGS. 9 and 11, information representing a predetermined relationship (e.g. proportional relationship) between a value of a signal output from the filter 18 and that of a signal output from the amplifier 7b (second rear-stage circuit) in a state where a signal output from the amplifier 7d (first rear-stage circuit) is not saturated when the optical characteristic measuring device according to the further embodiment is in a first mode (i.e. simultaneously measures the flicker and the optical characteristics different from the flicker) is stored in the storage section 91 in advance. A signal output from any one of the amplifiers 7a, 7b and 7c is used to determine whether or not the signal output from the amplifier 7d is saturated. Here, it is assumed that the signal output from the amplifier 7b is used.

The information representing the predetermined relationship is, for example, a formula representing a relationship between the value of the signal output from the filter 18 and that of the signal output from the amplifier 7b if the signal output from the amplifier 7d is not saturated.

The determination section 92 determines whether or not the signal output from the amplifier 7d is saturated using the value of the signal output from the filter 18, the value of the signal output from the amplifier 7b and the information representing the predetermined relationship stored in the storage section 91 in the first mode. The determination section 92 determines that the signal output from the amplifier 7d is not saturated upon certifying that the value of the signal output from the filter 18 and that of the signal output from the amplifier 7b establish the predetermined relationship. In contrast, the determination section 92 determines that the signal output from the amplifier 7d is saturated upon certifying that the value of the signal output from the filter 18 and that of the signal output from the amplifier 7b do not establish the predetermined relationship.

When the determination section 92 determines that the signal output from the amplifier 7d is saturated, the arithmetic control unit 9 causes the display unit 11 to display a message to the effect that an error has occurred in flicker measurement and a message to the effect that this is caused by the saturated signal output from the amplifier 7d. In this way, the arithmetic control unit 9 and the display unit 11 function as a notification unit. The notification unit gives a predetermined notification when it is determined that the signal output from the amplifier 7d is saturated.

If the signal output from the amplifier 7b is saturated, the determination section 92 cannot precisely determine whether or not the signal output from the amplifier 7d is saturated. Accordingly, the amplifier 7b has a larger maximum value of a dynamic range (in other words, has a wider dynamic range) than the amplifier 7d. In this way, the signal output from the amplifier 7b is prevented from being saturated. For example, if a power supply voltage of an operational amplifier of the amplifier 7b is large, the maximum value of the dynamic range becomes large.

When the determination section 92 determines that the signal output from the amplifier 7d is not saturated, the arithmetic control unit 9 simultaneously measures the flicker and the optical characteristics different from the flicker similarly to the arithmetic control unit 9 (FIG. 7) of the previous embodiment.

Since operations in second and third modes of the optical characteristic measuring device according to the further embodiment are the same as those in the second and third modes of the optical characteristic measuring device according to the previous embodiment, these operations are not described.

(Summary of Embodiments)

An optical characteristic measuring device according to the invention is an optical characteristic measuring device capable of simultaneously measuring flicker and an optical characteristic different from the flicker and includes a first light receiving sensor configured to measure the flicker, a first rear-stage circuit configured to have a signal output from the first light receiving sensor input thereto, a second light receiving sensor configured to measure the optical characteristic and a second rear-stage circuit configured to have a signal output from the second light receiving sensor input thereto.

In the optical characteristic measuring device according to the invention, the light receiving sensor and the rear-stage circuit for flicker measurement and the light receiving sensor and the rear-stage circuit for measurement of the optical characteristic different from the flicker are different. Thus, according to the optical characteristic measuring device according to the invention, the flicker and the optical characteristic different from the flicker can be simultaneously measured and the rear-stage circuit suitable for flicker measurement and the rear-stage circuit suitable for measurement of the optical characteristic different from the flicker can be respectively used. The first rear-stage circuit is, for example, a voltage-current conversion circuit using an operational amplifier, and the second rear-stage circuit is, for example, an integration circuit using an operational amplifier.

The above configuration further includes a switch unit configured to selectively switch a first connection, a second connection and a third connection if the first connection is to connect an output of the first light receiving sensor and an input of the first rear-stage circuit and connect an output of the second light receiving sensor and an input of the second rear-stage circuit, the second connection is to connect the output of the first light receiving sensor and the input of the first rear-stage circuit and connect the output of the second light receiving sensor and the input of the first rear-stage circuit and the third connection is to connect the output of the first light receiving sensor and the input of the second rear-stage circuit and connect the output of the second light receiving sensor and the input of the second rear-stage circuit, and a mode control section configured to set a state of the first connection by controlling the switch unit in a first mode for simultaneously measuring the flicker and the optical characteristic, sets a state of the second connection by controlling the switch unit in a second mode for measuring the flicker without measuring the optical characteristic and set a state of the third connection by controlling the switch unit in a third mode for measuring the optical characteristic without measuring the flicker.

If a signal input to the first rear-stage circuit is too small, flicker measurement accuracy is reduced. In the second mode, the optical characteristic different from the flicker is not measured. Accordingly, in this configuration, the state of the second connection is set in the second mode. In this way, a signal output from the second light receiving sensor is added to a signal output from the first light receiving sensor and the resulting addition signal is input to the first rear-stage circuit. Thus, according to this configuration, it can be prevented that the signal input to the first rear-stage circuit is too small in the second mode.

If a signal input to the second rear-stage circuit is too small, measurement accuracy for the optical characteristic different from the flicker is reduced. In the third mode, the flicker is not measured. Accordingly, in this configuration, the state of the third connection is set in the third mode. In this way, a signal output from the first light receiving sensor is added to a signal output from the second light receiving sensor and the resulting addition signal is input to the second rear-stage circuit. Thus, according to this configuration, it can be prevented that the signal input to the second rear-stage circuit is too small in the third mode.

The above configuration further includes a switch unit configured to selectively switch connection between an output of the second light receiving sensor and an input of the second rear-stage circuit or connection between the output of the second light receiving sensor and an input of the first rear-stage circuit, and a mode control section configured to connect the output of the second light receiving sensor and the input of the second rear-stage circuit by controlling the switch unit in a first mode for simultaneously measuring the flicker and the optical characteristic and connect the output of the second light receiving sensor and the input of the first rear-stage circuit by controlling the switch unit in a second mode for measuring the flicker without measuring the optical characteristic.

If a signal input to the first rear-stage circuit is too small, flicker measurement accuracy is reduced. In the second mode, the optical characteristic different from the flicker is not measured. Accordingly, in this configuration, the output of the second light receiving sensor and the input of the first rear-stage circuit are connected in the second mode. In this way, a signal output from the second light receiving sensor is added to a signal output from the first light receiving sensor and the resulting addition signal is input to the first rear-stage circuit. Thus, according to this configuration, it can be prevented that the signal input to the first rear-stage circuit is too small in the second mode.

The above configuration further includes a switch unit configured to selectively switch connection between an output of the first light receiving sensor and an input of the first rear-stage circuit or connection between the output of the first light receiving sensor and an input of the second rear-stage circuit, and a mode control section configured to connect the output of the first light receiving sensor and the input of the first rear-stage circuit by controlling the switch unit in a first mode for simultaneously measuring the flicker and the optical characteristic and connect the output of the first light receiving sensor and the input of the second rear-stage circuit by controlling the switch unit in a third mode for measuring the optical characteristic without measuring the flicker.

If a signal input to the second rear-stage circuit is too small, measurement accuracy for the optical characteristic different from the flicker is reduced. In the third mode, the flicker is not measured. Accordingly, in this configuration, the output of the first light receiving sensor and the input of the second rear-stage circuit are connected in the third mode. In this way, a signal output from the first light receiving sensor is added to a signal output from the second light receiving sensor and the resulting addition signal is input to the second rear-stage circuit. Thus, according to this configuration, it can be prevented that the signal input to the second rear-stage circuit is too small in the third mode.

The above configuration further includes a filter configured to have a signal output from the first rear-stage circuit input thereto and output a signal of a frequency component targeted in measurement of the flicker, out of the input signal, a storage section storing in advance information representing a predetermined relationship between a value of a signal output from the filter and that of a signal output from the second rear-stage circuit in a state where the signal output from the first rear-stage circuit is not saturated when the optical characteristic measuring device simultaneously measures the flicker and the optical characteristic, a determination section configured to determine whether or not the signal output from the first rear-stage circuit is saturated using the value of the signal output from the filter, the value of the signal output from the second rear-stage circuit and the information representing the predetermined relationship and stored in the storage section when the optical characteristic measuring device simultaneously measures the flicker and the optical characteristic, and a notification unit configured to give a predetermined notification when it is determined that the signal output from the first rear-stage circuit is saturated, and the second rear-stage circuit has a larger maximum value of a dynamic range than the first rear-stage circuit.

When the signal output from the first rear-stage circuit is saturated, a maximum value of that signal is lower than an original maximum value. For example, if the maximum value becomes 100 due to the saturation of the signal although the maximum value should be 200, an error of a flicker measurement value becomes large and the flicker measurement value cannot be used.

The signal output from the first rear-stage circuit includes other frequency components in addition to the frequency component targeted in flicker measurement. Thus, the signal of the frequency component targeted in flicker measurement is extracted from the signal output from the first rear-stage circuit and is output by the filter. Since the signal output from the filter is smoothed, whether or not the signal output from the first rear-stage circuit is saturated cannot be determined from the waveform of the signal output from the filter.

The present inventors focused on a relationship of a value of a signal output from the filter and a value of a signal output from the second rear-stage circuit when the flicker and the optical characteristic different from the flicker were simultaneously measured. If the signal output from the first rear-stage circuit is not saturated, a predetermined relationship (e.g. proportional relationship) is established between the value of the signal output from the filter and that of the signal output from the second rear-stage circuit. In contrast, if the signal output from the first rear-stage circuit is saturated, the predetermined relationship is not established between the value of the signal output from the filter and that of the signal output from the second rear-stage circuit.

This configuration is based on the following. When the optical characteristic measuring device simultaneously measures the flicker and the optical characteristic different from the flicker, the determination section determines whether or not the signal output from the first rear-stage circuit is saturated, using the value of the signal output from the filter, the value of the signal output from the second rear-stage circuit and the information representing the predetermined relationship, and the notification unit gives a predetermined notification when the determination section determines that the signal is saturated.

If the signal output from the second rear-stage circuit is saturated, the determination section cannot precisely determine whether or not the signal output from the first rear-stage circuit is saturated. Accordingly, the second rear-stage circuit has a larger maximum value of the dynamic range (in other words, has a wider dynamic range) than the first rear-stage circuit. In this way, the signal output from the second rear-stage circuit is prevented from being saturated.

This application is based on Japanese Patent Application No. 2015-245500 filed on December 16, 2015.

To express the present invention, the present invention has been appropriately and sufficiently described through the embodiments with reference to the drawings above. However, it should be recognized that those skilled in the art can easily modify and/or improve the embodiments described above. Therefore, it is construed that modifications or improvements made by those skilled in the art are included within the scope of the appended claims unless those modifications or improvements depart from the scope of the appended claims.

**INDUSTRIAL APPLICABILITY**

According to the present invention, it is possible to provide an optical characteristic measuring device.

**Claims**

1. An optical characteristic measuring device (1) capable of simultaneously measuring flicker and an optical characteristic different from the flicker, comprising:

   a first light receiving sensor(6d) configured to measure the flicker;
   a first rear-stage circuit(7d) configured to have a signal output from the first light receiving sensor input thereto;

a second light receiving sensor (6a, 6b, 6c) configured to measure the optical characteristic;

a second rear-stage circuit(7a, 7b, 7c) configured to have a signal output from the second light receiving sensor input thereto;

a switch unit (16,17) configured to selectively switch a first connection, a second connection and a third connection

if the first connection is to connect an output of the first light receiving sensor (6d) and an input of the first rear-stage circuit (7d) and connect an output of the second light receiving sensor (6b) and an input of the second rear-stage circuit (7b),

the second connection is to connect the output of the first light receiving sensor (6d) and the input of the first rear-stage circuit (7d) and connect the output of the second light receiving sensor (6b) and the input of the first rear-stage circuit (7d) and

the third connection is to connect the output of the first light receiving sensor (6d) and the input of the second rear-stage circuit (7b) and connect the output of the second light receiving sensor (6b) and the input of the second rear-stage circuit (7b); and

a mode control section (90) configured to

set a state of the first connection (S3) by controlling the switch unit in a first mode for simultaneously measuring the flicker and the optical characteristic (S4),

set a state of the second connection (S7) by controlling the switch unit in a second mode for measuring the flicker without measuring the optical characteristic (S8) and

set a state of the third connection (S11) by controlling the switch unit in a third mode for measuring the optical characteristic without measuring the flicker (S12).

2. An optical characteristic measuring device (1) capable of simultaneously measuring flicker and an optical characteristic different from the flicker, comprising:

a first light receiving sensor(6d) configured to measure the flicker;

a first rear-stage circuit(7d) configured to have a signal output from the first light receiving sensor input thereto;

a second light receiving sensor (6a, 6b, 6c) configured to measure the optical characteristic;

a second rear-stage circuit(7a, 7b, 7c) configured to have a signal output from the second light receiving sensor input thereto;

a switch unit (15) configured to selectively switch a connection between an output of the second light receiving sensor (6b) and an input of the second rear-stage circuit (7b) or a connection between the output of the second light receiving sensor (6b) and an input of the first rear-stage circuit (7d); and

a mode control section (90) configured to

connect the output of the second light receiving sensor (6b) and the input of the second rear-stage circuit (7b) by controlling the switch unit (17) in a first mode for simultaneously measuring the flicker and the optical characteristic and

connect the output of the second light receiving sensor (6b) and the input of the first rear-stage circuit (7d) by controlling the switch unit (17) in a second mode for measuring the flicker without measuring the optical characteristic.

3. An optical characteristic measuring device (1) capable of simultaneously measuring flicker and an optical characteristic different from the flicker, comprising:

a first light receiving sensor(6d) configured to measure the flicker;

a first rear-stage circuit(7d) configured to have a signal output from the first light receiving sensor input thereto;

a second light receiving sensor (6a, 6b, 6c) configured to measure the optical characteristic;

a second rear-stage circuit(7a, 7b, 7c) configured to have a signal output from the second light receiving sensor input thereto;

a switch unit (17) configured to selectively switch a connection between an output of the first light receiving sensor (6d) and an input of the first rear-stage circuit (7d) or a connection between the output of the first light receiving sensor (6d) and an input of the second rear-stage circuit (7b); and

a mode control section (90) configured to

connect the output of the first light receiving sensor (6d) and the input of the first rear-stage circuit (7d) by controlling the switch unit (17) in a first mode for simultaneously measuring the flicker and the optical characteristic and

connect the output of the first light receiving sensor (6d) and the input of the second rear-stage circuit (7b) by controlling the switch unit (17) in a third mode for measuring the optical characteristic without measuring the flicker.

4. An optical characteristic measuring device according to claim 3, wherein:

the switch unit (16) is additionally configured to selectively switch a connection between an output of the second light receiving sensor (6b) and an input of the second rear-stage circuit (7b) or a connection between the output of the second light receiving sensor (6b) and an input of the first rear-stage circuit (7d); and
the mode control section (90) is additionally configured to
connect the output of the second light receiving sensor (6b) and the input of the second rear-stage circuit (7b) by controlling the switch unit in the first mode for simultaneously measuring the flicker and the optical characteristic and
connect the output of the second light receiving sensor (6b) and the input of the first rear-stage circuit (7d) by controlling the switch unit in the second mode for measuring the flicker without measuring the optical characteristic.

5. An optical characteristic measuring device according to any one of claims 1 to 4, further comprising:

a filter (18) configured to have a signal output from the first rear-stage circuit input thereto and output a signal of a frequency component targeted in measurement of the flicker, out of the input signal;
a storage section (91) storing in advance information representing a predetermined relationship between a value of a signal output from the filter and that of a signal output from the second rear-stage circuit (7a, 7b, 7c) in a state where the signal output from the first rear-stage circuit (7d) is not saturated when the optical characteristic measuring device simultaneously measures the flicker and the optical characteristic;
a determination section (92) configured to determine whether or not the signal output from the first rear-stage circuit is saturated using the value of the signal output from the filter, the value of the signal output from the second rear-stage circuit and the information representing the predetermined relationship and stored in the storage section when the optical characteristic measuring device simultaneously measures the flicker and the optical characteristic; and
a notification unit (9,11) configured to give a predetermined notification when it is determined that the signal output from the first rear-stage circuit is saturated;
the second rear-stage circuit having a larger maximum value of a dynamic range than the first rear-stage circuit.

**Patentansprüche**

1. Messvorrichtung (1) optischer Eigenschaften, die im Stande ist, gleichzeitig Flackern und eine von dem Flackern verschiedene optische Eigenschaft zu messen, umfassend:

einen ersten Lichtempfangssensor (6d), der konfiguriert ist, das Flackern zu messen;
einen ersten Rückstufenschaltkreis (7d), der konfiguriert ist, dass ein von dem ersten Lichtempfangssensor ausgegebenes Signal eingegeben wird;
einen zweiten Lichtempfangssensor (6a, 6b, 6c), der konfiguriert ist, die optische Eigenschaft zu messen;
einen zweiten Rückstufenschaltkreis (7a, 7b, 7c), der konfiguriert ist, dass ein von dem zweiten Lichtempfangssensor ausgegebenes Signal eingegeben wird;
eine Schalteinheit (16, 17), die konfiguriert ist, selektiv eine ersten Verbindung, eine zweite Verbindung und eine dritte Verbindung zu schalten,
falls die erste Verbindung einen Ausgang des ersten Lichtempfangssensors (6d) und einen Eingang des ersten Rückstufenschaltkreises (7d) verbindet und einen Ausgang des zweiten Lichtempfangssensors (6b) und einen Eingang des zweiten Rückstufenschaltkreises (7b) verbindet,
die zweite Verbindung den Ausgang des ersten Lichtempfangssensors (6d) und den Eingang des ersten Rückstufenschaltkreises (7d) verbindet und den Ausgang des zweiten Lichtempfangssensors (6b) und den Eingang des ersten Rückstufenschaltkreises (7d) verbindet, und
die dritte Verbindung den Ausgang des ersten Lichtempfangssensors (6d) und den Eingang des zweiten Rückstufenschaltkreises (7b) verbindet und den Ausgang des zweiten Lichtempfangssensors (6b) und den Eingang des zweiten Rückstufenschaltkreises (7b) verbindet; und
einen Modussteuerabschnitt (90), der konfiguriert ist zum
Einstellen eines Zustands der ersten Verbindung (S3) durch Steuern der Schalteinheit in einem ersten Modus zum gleichzeitigen Messen des Flackerns und der optischen Eigenschaft (S4),

Einstellen eines Zustands der zweiten Verbindung (S7) durch Steuern der Schalteinheit in einem zweiten Modus zum Messen des Flackerns ohne Messen der optischen Eigenschaft (S8) und

Einstellen eines Zustands der dritten Verbindung (S11) durch Steuern der Schalteinheit in einem dritten Modus zum Messen der optischen Eigenschaft ohne Messen des Flackerns (S12).

2. Messvorrichtung (1) optischer Eigenschaften, die im Stande ist, gleichzeitig Flackern und eine von dem Flackern verschiedene optische Eigenschaft zu messen, umfassend:

einen ersten Lichtempfangssensor (6d), der konfiguriert ist, das Flackern zu messen;
einen ersten Rückstufenschaltkreis (7d), der konfiguriert ist, dass ein von dem ersten Lichtempfangssensor ausgegebenes Signal eingegeben wird;
einen zweiten Lichtempfangssensor (6a, 6b, 6c), der konfiguriert ist, die optische Eigenschaft zu messen;
einen zweiten Rückstufenschaltkreis (7a, 7b, 7c), der konfiguriert ist, dass ein von dem zweiten Lichtempfangssensor ausgegebenes Signal eingegeben wird;
eine Schalteinheit (17), die konfiguriert ist, selektiv eine Verbindung zwischen einem Ausgang des zweiten Lichtempfangssensors (6b) und einem Eingang des zweiten Rückstufenschaltkreises (7b) oder eine Verbindung zwischen dem Ausgang des zweiten Lichtempfangssensors (6b) und einem Eingang des ersten Rückstufenschaltkreises (7d) zu schalten; und
einen Modussteuerabschnitt (90), der konfiguriert ist zum
Verbinden des Ausgangs des zweiten Lichtempfangssensors (6b) und des Eingangs des zweiten Rückstufenschaltkreises (7b) durch Steuern der Schalteinheit (17) in einem ersten Modus zum gleichzeitigen Messen des Flackerns und der optischen Eigenschaft und
Verbinden des Ausgangs des zweiten Lichtempfangssensors (6b) und des Eingangs des ersten Rückstufenschaltkreises (7d) durch Steuern der Schalteinheit (17) in einem zweiten Modus zum Messen des Flackerns ohne Messen der optischen Eigenschaft.

3. Messvorrichtung (1) optischer Eigenschaften, die im Stande ist, gleichzeitig Flackern und eine von dem Flackern verschiedene optische Eigenschaft zu messen, umfassend:

einen ersten Lichtempfangssensor (6d), der konfiguriert ist, das Flackern zu messen;
einen ersten Rückstufenschaltkreis (7d), der konfiguriert ist, dass ein von dem ersten Lichtempfangssensor ausgegebenes Signal eingegeben wird;
einen zweiten Lichtempfangssensor (6a, 6b, 6c), der konfiguriert ist, die optische Eigenschaft zu messen;
einen zweiten Rückstufenschaltkreis (7a, 7b, 7c), der konfiguriert ist, dass ein von dem zweiten Lichtempfangssensor ausgegebenes Signal eingegeben wird;
eine Schalteinheit (17), die konfiguriert ist, selektiv eine Verbindung zwischen einem Ausgang des ersten Lichtempfangssensors (6d) und einem Eingang des ersten Rückstufenschaltkreises (7d) oder eine Verbindung zwischen dem Ausgang des ersten Lichtempfangssensors (6d) und einem Eingang des zweiten Rückstufenschaltkreises (7b) zu schalten; und einen Modussteuerabschnitt (90), konfiguriert zum
Verbinden des Ausgangs des ersten Lichtempfangssensors (6d) und des Eingangs des ersten Rückstufenschaltkreises (7d) durch Steuern der Schalteinheit (17) in einem ersten Modus zum gleichzeitigen Messen des Flackerns und der optischen Eigenschaft und
Verbinden des Ausgangs des ersten Lichtempfangssensors (6d) und des Eingangs der zweiten Rückstufenschaltkreises (7b) durch Steuern der Schalteinheit (17) in einem dritten Modus zum Messen der optischen Eigenschaft ohne Messen des Flackerns.

4. Messvorrichtung optischer Eigenschaften nach Anspruch 3, wobei:

die Schalteinheit (16) zusätzlich konfiguriert ist, selektiv eine Verbindung zwischen einem Ausgang des zweiten Lichtempfangssensors (6b) und einem Eingang des zweiten Rückstufenschaltkreises (7b) oder eine Verbindung zwischen dem Ausgang des zweiten Lichtempfangssensors (6b) und einem Eingang des ersten Rückstufenschaltkreises (7d) zu schalten; und
der Modussteuerabschnitt (90) zusätzlich konfiguriert ist zum Verbinden des Ausgangs des zweiten Lichtempfangssensors (6b) und des Eingangs des zweiten Rückstufenschaltkreises (7b) durch Steuern der Schalteinheit im ersten Modus zum gleichzeitigen Messen des Flackerns und der optischen Eigenschaft und
Verbinden des Ausgangs des zweiten Lichtempfangssensors (6b) und des Eingangs des ersten Rückstufenschaltkreises (7d) durch Steuern der Schalteinheit in dem zweiten Modus zum Messen des Flackerns ohne Messen der optischen Eigenschaft.

5. Messvorrichtung optischer Eigenschaften nach einem der Ansprüche 1 bis 4, weiter umfassend:

ein Filter (18), das konfiguriert ist, dass ein von dem ersten Rückstufenschaltkreis ausgegebenes Signal eingegeben wird, und es ein Signal einer Frequenzkomponente aus dem Eingangssignal ausgibt, auf die bei Messung des Flackerns abgezielt wird;
einen Speicherabschnitt (91), der im Voraus Informationen speichert, die eine vorgegebene Beziehung zwischen einem Wert eines Signalausgangs von dem Filter und dem eines Signalausgangs von dem zweiten Rückstufenschaltkreis (7a, 7b, 7c) in einem Zustand darstellen, wo der Signalausgang von dem ersten Rückstufenschaltkreis (7d) nicht gesättigt ist, wenn die Messvorrichtung optischer Eigenschaften gleichzeitig das Flackern und die optische Eigenschaft misst;
einen Ermittlungsabschnitt (92), der konfiguriert ist, unter Verwendung des Signalausgangs von dem Filter, des Werts des Signalausgangs von dem zweiten Rückstufenschaltkreis und der Informationen, die die vorgegebene Beziehung darstellen und in dem Speicherabschnitt gespeichert werden, zu ermitteln, ob der Signalausgang von dem ersten Rückstufenschaltkreis gesättigt ist oder nicht, wenn die Messvorrichtung optischer Eigenschaften gleichzeitig das Flackern und die optische Eigenschaft misst; und
eine Benachrichtigungseinheit (9, 11), die konfiguriert ist, eine vorgegebene Benachrichtigung auszustellen, wenn ermittelt wird, dass der Signalausgang von dem ersten Rückstufenschaltkreis gesättigt ist;
der zweite Rückstufenschaltkreis einen größeren Höchstwert eines Dynamikbereichs aufweist als der erste Rückstufenschaltkreis.

## Revendications

1. Dispositif de mesure de caractéristique optique (1) susceptible de mesurer simultanément le scintillement et une caractéristique optique différente du scintillement, comprenant :

un premier capteur de réception de lumière (6d) configuré pour mesurer le scintillement ;
un premier circuit de dernier étage (7d) vers lequel un signal délivré par le premier capteur de réception de lumière est entré ;
un second capteur de réception de lumière (6a, 6b, 6c) configuré pour mesurer la caractéristique optique ;
un second circuit de dernier étage (7a, 7b, 7c) vers lequel un signal délivré par le second capteur de réception de lumière est entré ;
une unité de commutation (16, 17) configurée pour commuter de manière sélective une première connexion, une deuxième connexion et une troisième connexion
si la première connexion doit connecter une sortie du premier capteur de réception de lumière (6d) et une entrée du premier circuit de dernier étage (7d) et connecter une sortie du second capteur de réception de lumière (6b) et une entrée du second circuit de dernier étage (7b),
la deuxième connexion doit connecter la sortie du premier capteur de réception de lumière (6d) et l'entrée du premier circuit de dernier étage (7d) et connecter la sortie du second capteur de réception de lumière (6b) et l'entrée du premier circuit de dernier étage (7d), et
la troisième connexion doit connecter la sortie du premier capteur de réception de lumière (6d) et l'entrée du second circuit de dernier étage (7b) et connecter la sortie du second capteur de réception de lumière (6b) et l'entrée du second circuit de dernier étage (7b) ; et
une section de commande de mode (90) configurée pour
fixer un état de la première connexion (S3) en commandant l'unité de commutation dans un premier mode pour mesurer simultanément le scintillement et la caractéristique optique (S4),
fixer un état de la deuxième connexion (S7) en commandant l'unité de commutation dans un deuxième mode pour mesurer le scintillement sans mesurer la caractéristique optique (S8), et
fixer un état de la troisième connexion (S11) en commandant l'unité de commutation dans un troisième mode pour mesurer la caractéristique optique sans mesurer le scintillement (S12).

2. Dispositif de mesure de caractéristique optique (1) susceptible de mesurer simultanément le scintillement et une caractéristique optique différente du scintillement, comprenant :

un premier capteur de réception de lumière (6d) configuré pour mesurer le scintillement ;
un premier circuit de dernier étage (7d) vers lequel un signal délivré par le premier capteur de réception de lumière est entré ;
un second capteur de réception de lumière (6a, 6b, 6c) configuré pour mesurer la caractéristique optique ;

un second circuit de dernier étage (7a, 7b, 7c) vers lequel un signal délivré par le second capteur de réception de lumière est entré ;

une unité de commutation (15) configurée pour commuter de manière sélective une connexion entre une sortie du second capteur de réception de lumière (6b) et une entrée du second circuit de dernier étage (7b) ou une connexion entre la sortie du second capteur de réception de lumière (6b) et une entrée du premier circuit de dernier étage (7d) ; et

une section de commande de mode (90) configurée pour

connecter la sortie du second capteur de réception de lumière (6b) et l'entrée du second circuit de dernier étage (7b) en commandant l'unité de commutation (17) dans un premier mode pour mesurer simultanément le scintillement et la caractéristique optique, et

connecter la sortie du second capteur de réception de lumière (6b) et l'entrée du premier circuit de dernier étage (7d) en commandant l'unité de commutation (17) dans un deuxième mode pour mesurer le scintillement sans mesurer la caractéristique optique.

3. Dispositif de mesure de caractéristique optique (1) susceptible de mesurer simultanément le scintillement et une caractéristique optique différente du scintillement, comprenant:

un premier capteur de réception de lumière (6d) configuré pour mesurer le scintillement ;

un premier circuit de dernier étage (7d) vers lequel un signal délivré par le premier capteur de réception de lumière est entré ;

un second capteur de réception de lumière (6a, 6b, 6c) configuré pour mesurer la caractéristique optique ;

un second circuit de dernier étage (7a, 7b, 7c) vers lequel un signal délivré par le second capteur de réception de lumière est entré ;

une unité de commutation (17) configurée pour commuter de manière sélective une connexion entre une sortie du premier capteur de réception de lumière (6d) et une entrée du premier circuit de dernier étage (7d) ou une connexion entre la sortie du premier capteur de réception de lumière (6d) et une entrée du second circuit de dernier étage (7b) ; et une section de commande de mode (90) configurée pour

connecter la sortie du premier capteur de réception de lumière (6d) et l'entrée du premier circuit de dernier étage (7d) en commandant l'unité de commutation (17) dans un premier mode pour mesurer simultanément le scintillement et la caractéristique optique, et

connecter la sortie du premier capteur de réception de lumière (6d) et l'entrée du second circuit de dernier étage (7b) en commandant l'unité de commutation (17) dans un troisième mode pour mesurer la caractéristique optique sans mesurer le scintillement.

4. Dispositif de mesure de caractéristique optique selon la revendication 3, dans lequel :

l'unité de commutation (16) est de plus configurée pour commuter de manière sélective une connexion entre une sortie du second capteur de réception de lumière (6b) et une entrée du second circuit de dernier étage (7b) ou une connexion entre la sortie du second capteur de réception de lumière (6b) et une entrée du premier circuit de dernier étage (7d) ; et

la section de commande de mode (90) est de plus configurée pour connecter la sortie du second capteur de réception de lumière (6b) et l'entrée du second circuit de dernier étage (7b) en commandant l'unité de commutation dans le premier mode pour mesurer simultanément le scintillement et la caractéristique optique, et

connecter la sortie du second capteur de réception de lumière (6b) et l'entrée du premier circuit de dernier étage (7d) en commandant l'unité de commutation dans le deuxième mode pour mesurer le scintillement sans mesurer la caractéristique optique.

5. Dispositif de mesure de caractéristique optique selon l'une quelconque des revendications 1 à 4, comprenant en outre :

un filtre (18) vers lequel un signal délivré par le premier circuit de dernier étage est entré et pour délivrer un signal d'une composante de fréquence ciblée lors de la mesure du scintillement, hors du signal d'entrée ;

une section de stockage (91) stockant à l'avance des informations représentant une relation prédéterminée entre une valeur d'un signal délivré par le filtre et celle d'un signal délivré par le second circuit de dernier étage (7a, 7b, 7c) dans un état où le signal délivré par le premier circuit de dernier étage (7d) n'est pas saturé quand le dispositif de mesure de caractéristique optique mesure simultanément le scintillement et la caractéristique optique ;

une section de détermination (92) configurée pour déterminer si vraiment le signal délivré par le premier circuit de dernier étage est saturé en utilisant la valeur du signal délivré par le filtre, la valeur du signal délivré par le second circuit de dernier étage et les informations représentant la relation prédéterminée et stockées dans la section de stockage quand le dispositif de mesure de caractéristique optique mesure simultanément le scintillement et la caractéristique optique ; et

une unité de notification (9, 11) configurée pour donner une notification prédéterminée quand il est déterminé que le signal délivré par le premier circuit de dernier étage est saturé ;

le second circuit de dernier étage présentant une valeur maximale d'une plage dynamique plus grande que le premier circuit de dernier étage.

# FIG.1

EP 3 379 224 B1

# FIG.2

X VALUE
DETECTION
CIRCUIT

6a

7a

AD CONVERTER8a

Y VALUE
DETECTION
CIRCUIT

6b

7b

AD CONVERTER8b

Z VALUE
DETECTION
CIRCUIT

6c

7c

AD CONVERTER8c

FLICKER
MEASUREMENT
CIRCUIT

6d

7d

AD CONVERTER8d

# FIG.3

X VALUE DETECTION CIRCUIT

6a

7a → AD CONVERTER8a

Y VALUE DETECTION CIRCUIT

6b

15

7b → AD CONVERTER8b

FLICKER MEASUREMENT CIRCUIT

7d → AD CONVERTER8d

Z VALUE DETECTION CIRCUIT

6c

7c → AD CONVERTER8c

# FIG.4

X VALUE DETECTION CIRCUIT

6a

7a → AD CONVERTER8a

Y VALUE DETECTION CIRCUIT

6b

16

7b → AD CONVERTER8b

Z VALUE DETECTION CIRCUIT

6c

7c → AD CONVERTER8c

FLICKER MEASUREMENT CIRCUIT

6d

17

7d → AD CONVERTER8d

# FIG.5

X VALUE DETECTION CIRCUIT

6a

7a → AD CONVERTER8a

Y VALUE DETECTION CIRCUIT

6b

16

7b → AD CONVERTER8b

Z VALUE DETECTION CIRCUIT

6c

7c → AD CONVERTER8c

FLICKER MEASUREMENT CIRCUIT

6d

17

7d → AD CONVERTER8d

# FIG.6

X VALUE
DETECTION
CIRCUIT

6a

7a

AD CONVERTER8a

Y VALUE
DETECTION
CIRCUIT

6b

16

7b

AD CONVERTER8b

Z VALUE
DETECTION
CIRCUIT

6c

7c

AD CONVERTER8c

FLICKER
MEASUREMENT
CIRCUIT

6d

17

7d

AD CONVERTER8d

# FIG.7

OPERATION
UNIT ⌒10

9

AD CONVERTER8a →

ARITHMETIC
CONTROL
UNIT

AD CONVERTER8b →

MODE CONTROL
SECTION ⌒90

AD CONVERTER8c →

AD CONVERTER8d →

DISPLAY
UNIT ⌒11

# FIG.8

```
                    ( START )
                        │
                        ▼                          ⌐S1
        ┌───────────────────────────────────┐
        │   INPUT MEASUREMENT COMMAND        │
        └───────────────────────────────────┘
                        │
                        ▼                          ⌐S2
                   ╱─────────╲
          YES    ╱  COMMAND FOR ╲
      ◄─────────╱ SIMULTANEOUSLY  ╲
               ╲ MEASURING FLICKER, ╱
                ╲ CHROMATICITY AND ╱
                 ╲  LUMINANCE?    ╱
                   ╲───────────╱
                        │ NO
                        ▼                          ⌐S6
                   ╱─────────╲
                  ╱ COMMAND FOR╲        NO
                 ╱ MEASURING FLICKER ╲ ─────────►
                ╲ WITHOUT MEASURING ╱
                 ╲ CHROMATICITY AND ╱
                  ╲  LUMINANCE?    ╱
                   ╲───────────╱
                        │ YES
```

|  | | |
|---|---|---|
| | | JUDGE COMMAND FOR MEASURING CHROMATICITY AND LUMINANCE WITHOUT MEASURING FLICKER — S10 |
| STATE OF FIRST CONNECTION — S3 | STATE OF SECOND CONNECTION — S7 | STATE OF THIRD CONNECTION — S11 |
| SIMULTANEOUSLY MEASURE FLICKER, CHROMATICITY AND LUMINANCE — S4 | MEASURE FLICKER — S8 | MEASURE CHROMATICITY AND LUMINANCE — S12 |
| DISPLAY MEASUREMENT RESULTS — S5 | DISPLAY MEASUREMENT RESULT — S9 | DISPLAY MEASUREMENT RESULTS — S13 |

```
                        ▼
                     ( END )
```

# FIG.9

X VALUE DETECTION CIRCUIT

6a

7a

AD CONVERTER8a

Y VALUE DETECTION CIRCUIT

6b

16

7b

AD CONVERTER8b

Z VALUE DETECTION CIRCUIT

6c

7c

AD CONVERTER8c

FLICKER MEASUREMENT CIRCUIT

6d

17

7d

18

FILTER

AD CONVERTER8d

# FIG.10

SIGNAL MAGNITUDE

SATURATION LEVEL

S2

S3

S1

TIME

# FIG.11

```
                          ┌─── 10
                    ┌──────────────┐
                    │  OPERATION   │
                    │     UNIT     │
                    └──────────────┘
                           │
                           ▼        ┌─── 9
                    ┌──────────────────────┐
AD CONVERTER8a ───▶ │     ARITHMETIC       │
                    │      CONTROL         │
                    │       UNIT           │
                    │  ┌────────────────┐  │
                    │  │ MODE CONTROL   │──┼── 90
AD CONVERTER8b ───▶ │  │   SECTION      │  │
                    │  └────────────────┘  │
                    │  ┌────────────────┐  │
                    │  │   STORAGE      │──┼── 91
AD CONVERTER8c ───▶ │  │   SECTION      │  │
                    │  └────────────────┘  │
                    │  ┌────────────────┐  │
                    │  │ DETERMINATION  │──┼── 92
                    │  │   SECTION      │  │
AD CONVERTER8d ───▶ │  └────────────────┘  │
                    └──────────────────────┘
                           │        ┌─── 11
                           ▼
                    ┌──────────────┐
                    │ DISPLAY UNIT │
                    └──────────────┘
```

## REFERENCES CITED IN THE DESCRIPTION

**Patent documents cited in the description**

- JP H0829864 B
- US 20150163392 A
- JP 2002122513 A
- JP 2015245500 A